# EUROPÄISCHE PATENTSCHRIFT

(11) **EP 1 077 336 B1**
(45) Veröffentlichungstag und Bekanntmachung des Hinweises auf die Patenterteilung: **20.03.2002**
(21) Anmeldenummer: 99112927.1
(22) Anmeldetag: 05.07.1999
(51) Int. Cl.: F16H 3/093, F16H 3/091

(54) **Getriebekonzept für ein 6-Gang-Vorgelege-Wechselgetriebe für Kraftfahrzeuge**
Six-speed countershaft transmission system for motor vehicles
Boîte de vitesses à six vitesses du type à arbres secondaires pour véhicules automobiles

(43) Veröffentlichungstag der Anmeldung: 21.02.2001
(73) Patentinhaber: Ford Global Technologies, Inc., A subsidiary of Ford Motor Company, Dearborn, Michigan 48126 (US)
(72) Erfinder: Eggert, Ulrich, 41751 Viersen (DE); Bungart, Stephan, 42281 Wuppertal (DE); Dahl, Peter, 51515 Kuerten (DE); Nett, Hans Peter, 53518 Adenau (DE); Hegerath, Andreas, 50126 Bergheim (DE)
(74) Vertreter: Messulam, Alec Moses

(56) Entgegenhaltungen:
- EP-A- 0 046 373
- EP-A- 0 083 747
- DE-A- 19 524 233
- DE-A- 19 624 857

## Beschreibung

Die Erfindung bezieht sich auf die Verwendung von gleichen Bauteilen in einer Handschaltversion und in einer Lastschaltversion eines 6-Gang-Vorgelege-Wechselgetriebes für Kraftfahrzeuge der im Oberbegriff des Patentanspruches 1 erläuterten Art.

Aus der EP 0 046 373 A ist ein 6-Gang-Vorgelege-Wechselgetriebe für Kraftfahrzeuge bekannt, das zumindest eine Eingangswelle und zumindest zwei parallel hierzu angeordnete Vorgelegewellen aufweist, die jeweils mit einem Ritzel versehen sind, das in Eingriff mit einem Endabtriebszahnrad steht. Auf der Eingangswelle sind hierbei Festräder angeordnet, die in ständigem Eingriff mit Losrädem auf den Vorgelegewellen stehen benachbart denen einfache bzw. doppelte Synchronisiereinheiten vorgesehen sind, über die sie mit ihren entsprechenden Wellen treibend verbindbar sind.

Unter Beibehaltung möglichst vieler gleicher Bauteile ist für das Getriebe sowohl eine manuell betätigbare Handschaltversion als auch eine hilfskraftbetätigte Lastschaltversion gezeigt. Die beiden Versionen unterscheiden sich in der Anordnung der Eingangswellen, während die beiden Vorgelegewellen für beide Versionen gleich sind. Dabei ist die Anordnung der aufeinanderfolgenden Gänge so getroffen, daß einer doppelten Synchronisiereinheit nicht zwei aufeinanderfolgende Gänge, sondern jeweils der einem Gang folgende übernächste Gang zugeordnet ist, so daß durch eine entsprechende Vorwahl und einem Kupplungswechsel die Gangwechsel lastschaltend durchführbar sind.

Das bringt bei der manuell schaltbaren Handschaltversion den Nachteil mit sich, daß eine Schaltung über ein einfaches Schalthebelgestänge über eine Schaltkulisse in der üblichen Doppel-H-Schaltkulisse nicht möglich ist.

Aus der EP 0 083 747 B ist ein 6-Gang-Vorgelege-Wechselgetriebe für Kraftfahrzeuge bekannt, das von vorneherein nur als eine hilfskraftbetätigte Lastschaltversion mit einer entsprechenden Doppelkupplung und einer doppelten, aus einer Zentral- und einer Hohlwelle bestehenden Eingangswellenanordnung besteht. Auch hier sind die Festräder wieder auf den Eingangswellen angeordnet und stehen in ständigem Eingriff mit entsprechenden Losrädem auf den Vorgelegewellen, benachbart denen einfache bzw. doppelte Synchronisiereinheiten angeordnet sind, mit denen sie selektiv mit ihren entsprechenden Wellen treibend verbindbar sind. Die Vorgelegewellen weisen jeweils ein Ritzel auf, das in Eingriff mit einem Endabtriebszahnrad steht.

Aus der DE 196 24 857 A ist ein manuell schaltbares 6-Gang-Schaltgetriebe der im Obergebriff beschriebenen Art bekannt, bei dem die beiden einer Doppelsynchronisiereinheit zugeordneten Loszahnräder der Vorwärtsgänge immer nächsthöheren bzw. nächstniederen Gängen zugehören. Damit läßt sich zwar eine Handschaltversion mit der üblichen Doppel-H-Schaltkullisse realisieren, nicht jedoch eine Lastschaltversion.

Aufgabe der vorliegenden Erfindung ist es, für ein 6-Gang-Vorgelege-Wechselgetriebe für Kraftfahrzeuge gleiche Bauteile derart zu verwenden, daß unter Beibehaltung möglichst vieler Bauteile sowohl eine manuell schaltbare Handschaltversion als auch eine hilfskraftbetätigte Lastschaltversion des Vorgelege-Wechselgetriebes geschaffen werden kann, wobei für die Handschaltversion einer doppelten Synchronisiereinheit jeweils die aufeinanderfolgenden Gänge zugeordnet werden können, wohingegen bei der hilfskraftbetätigten Lastschaltversion einer Doppel-Synchronisiereinheit einem Gang jeweils der übernächste Gang zugeordnet ist.

Diese Aufgabe wird gelöst, indem bei einem 6-Gang-Vorgelege-Wechselgetriebe für Kraftfahrzeuge der im Oberbegriff des Patentanspruches 1 erläuterten Art gleiche Bauteile entsprechend der im Kennzeichenteil des Patentanspruches 1 aufgezeigten Maßnahmen vorgesehen werden.

Dadurch, daß die aus jeweils einem Festrad und einem Losrad gebildeten Zahnradpaare für die verschiedenen Gänge in der für die Lastschaltversion erforderlichen Anordnung und geometrischen Auslegung an den Eingangswellen bzw. den Vorgelegewellen ausgebildet bzw. angeordnet sind und in der Handschaltversion bei geänderter Eingangswelle und Festrädem auf entsprechend geänderten Vorgelegewellen die gleichen Losräder, wie bei der Lastschaltversion, jedoch in unterschiedlicher axialer Anordnung oder um 180° gedrehter Lage angeordnet sind, so daß einer doppelten Synchronisiereinheit jeweils aufeinanderfolgende Gänge wie (1 und 2; 3 und 4; 5 und 6) zugeordnet sind, kann die für die Fertigung der Losräder erforderliche Investition an Maschinen gering gehalten werden.

Die Erfindung wird anhand von Zeichnungen näher erläutert. Es zeigt:
- Fig. 1: ein Getriebeschaubild des erfindungsgemäßen 6-Gang-Vorgelege-Wechselgetriebes für Kraftfahrzeuge in der hilfskraftbetätigten Lastschaltversion;
- Fig. 2: ein Getriebeschaubild des erfindungsgemäßen 6-Gang-Vorgelege-Wechselgetriebe für Kraftfahrzeuge in der manuell schaltbaren Schaltversion;
- Fig. 3: eine Getriebeaufrollung der Lastschaltversion in Fig. 1;
- Fig. 4: eine Getriebeaufrollung der Handschaltversion in Fig. 2 und
- Fig. 5: eine schematische Anordnung über die Anordnung der Eingangswellen, der Vorgelegewellen und des Endabtriebszahnrades.

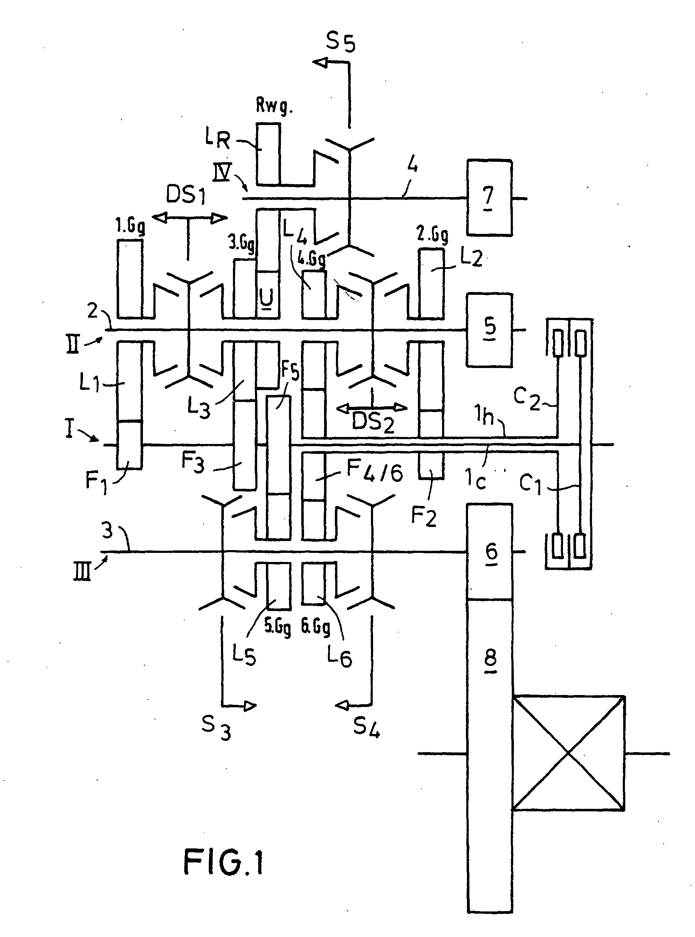

In der in Fig. 1 gezeigten Lastschaltversion weist das Getriebekonzept eine an sich bekannte Doppelkupplung auf, deren getrennt beaufschlagbare Kupplungsscheiben mit C1 und C2 bezeichnet sind, wobei C1 eine mit 1c bezeichnete zentrale Eingangswelle und C2 eine mit 1 h bezeichnete hohle Eingangswelle antreibt.

Parallel zu den beiden Eingangswellen 1c und 1h, die auf einer Wellenachse I angeordnet sind, sind eine erste Vorgelegewelle 2 auf einer Wellenachse II und eine zweite Vorgelegewelle 2 auf einer dritten Wellenachse III angeordnet.

Für den synchronisierten Rückwärtsgang ist eine zusätzliche, kürzere Vorgelegewelle 4 auf einer Wellenachse IV angeordnet und alle drei Vorgelegewellen 2, 3 und 4 weisen Ritzel 5, 6 und 7 auf, über die sie mit einem Endabtriebszahnrad 8 in treibender Verbindung stehen.

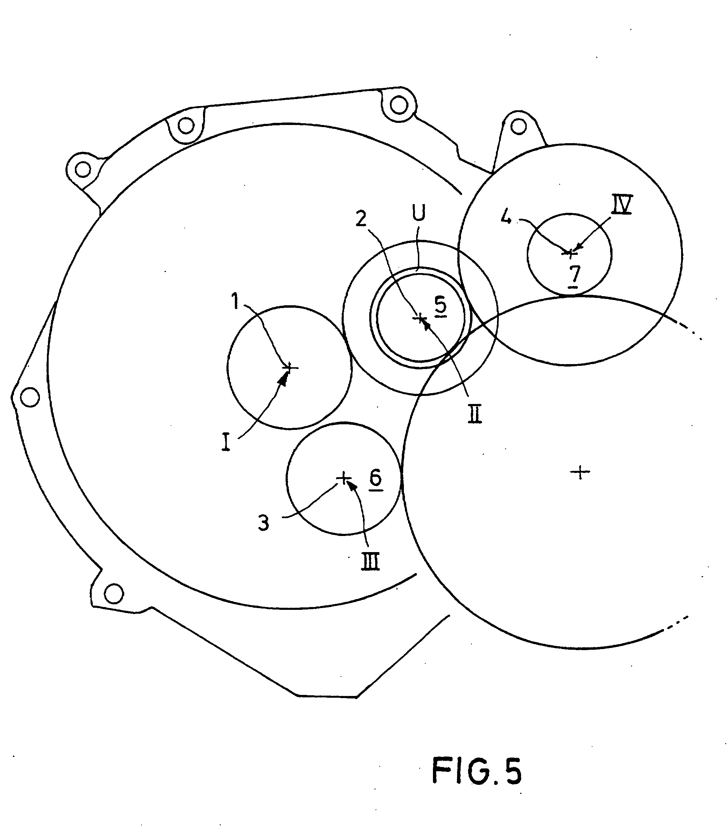

Die Lage der Wellenachsen I bis IV ergibt sich hierbei aus Fig. 5.

Auf den Eingangswellen 1c und 1h sind die Festräder für die Gangstufen angeordnet und mit F1, F3, F5, F4/6 und F2 bezeichnet. Die auf den Vorgelegewellen 2 bzw. 3 angeordneten Losräder sind entsprechend als L1, L3, L5, L4, L6 und L2 bezeichnet.

Mit dem Losrad L3 für den 3. Gang ist ein Umkehrrad U für das Losrad des Rückwärtsganges LR verbunden.

Zur Verbindung der verschiedenen Losräder mit ihren entsprechenden Vorgelegewellen sind eine Vielzahl von Synchronisiereinheiten angeordnet, und zwar zum Schalten des 1. und 3. Ganges eine Doppelsynchronisiereinheit DS1, zum Schalten des 2. und 4. Ganges eine Doppelsynchronisiereinheit DS2, zum Schalten des 5.

Ganges eine einfache Synchronisiereinheit S3, zum Schalten des 6. Ganges eine einfache Synchronisiereinheit S4 und zum Schalten des Rückwärtsganges eine einfache Synchronisiereinheit S5 angeordnet.

Wie bereits eingangs erwähnt, sind die verschiedenen Gänge derart einer Synchronisiereinheit zugeordnet, daß jeweils einem Gang der übernächste Gang benachbart ist, so daß bei der hilfskraftbetätigten Lastschaltversion ein drehmomentunterbrechungsfreies Schalten von einem Gang zum nächsten Gang in der Weise möglich ist, daß bei z.B. über die Kupplung C1 und dem Rädersatz F1/L1 und die nach links verschobene Synchronisiereinheit DS1 eingelegten 1. Gang der nächsthöhere 2. Gang durch Verschieben der Synchronisiereinheit DS2 nach rechts schon während des eingelegten 1. Ganges vorgewählt werden kann und durch Beaufschlagen der Kupplung C2 und gleichzeitigem Lösen der Kupplung C1 kraftübertragend gemacht werden kann.

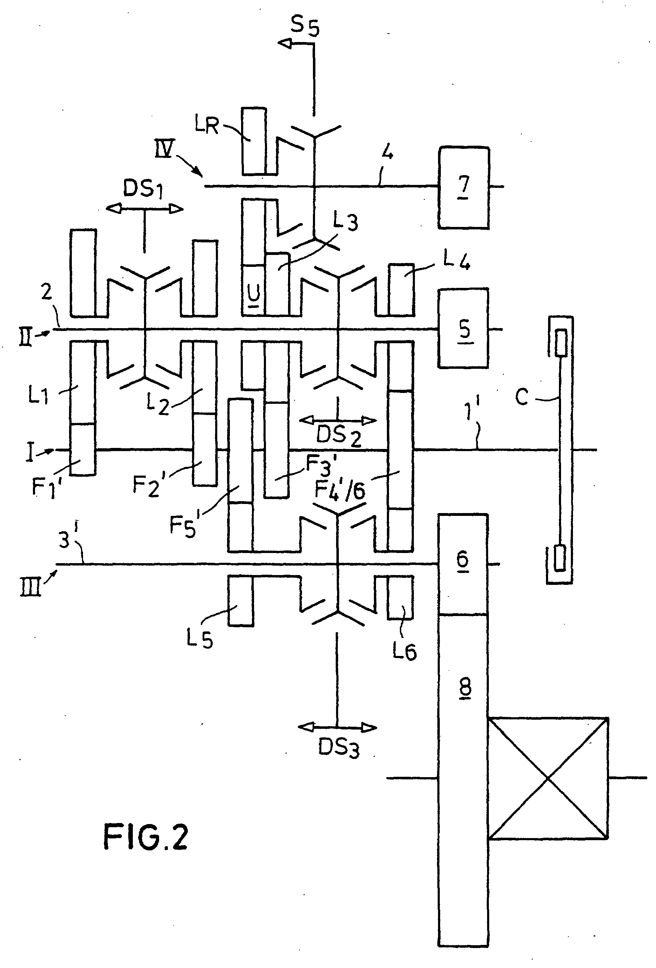

Bei der in Fig. 2 gezeigten manuell schaltbaren Handschaltversion sind identische Bauteile mit den gleichen Bezugszeichen wie in Fig. 1 bezeichnet, wohingegen baulich veränderte Bauteile mit den gleichen, jedoch mit einem Strichindex versehenen Bezugszeichen versehen sind.

Eine einfache Kupplung C treibt eine Eingangswelle 1' an, auf der entsprechende Festräder für die verschiedenen Zahnradpaare angeordnet sind, die, da sie sich von der Ausführungsform in Fig. 1 unterscheiden, mit F1', F2', F5', F3' und F4/6' versehen sind.

Gemäß der Erfindung sind die entsprechenden Losräder in genau der gleichen geometrischen Auslegung wie in Fig. 1 gezeigt ausgeführt und weisen dementsprechend die Bezugszeichen L1 bis L6 ohne einen Strichindex auf. Diese sind nämlich auf den entsprechenden Vorgelegewellen 2, die unverändert übernommen werden kann und 3', die durch die andere Lage der Synchronisiereinheit geändert sein muß, derart angeordnet, daß durch axial veränderte Anordnung und um 180° gedrehte Einbaulage die Anordnung der Gänge so getroffen wird, daß einer doppelten Synchronisiereinheit jeweils aufeinanderfolgende Gänge, wie z.B. 1 und 2, 3 und 4 und 5 und 6, zugeordnet sind.

Auf diese Weise kann die manuell schaltbare Handschaltversion mit einer herkömmlichen Handschaltvorrichtung in der für 6-Gang-Vorgelege-Wechselgetriebe üblichen Doppel-H-Schaltkulisse betätigt werden.

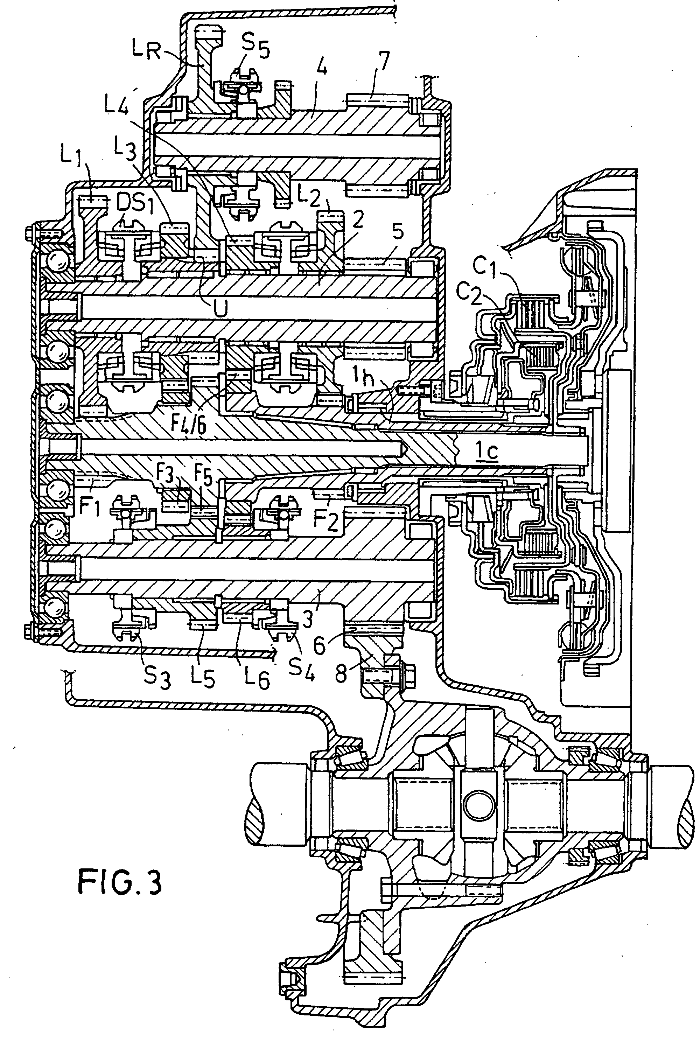

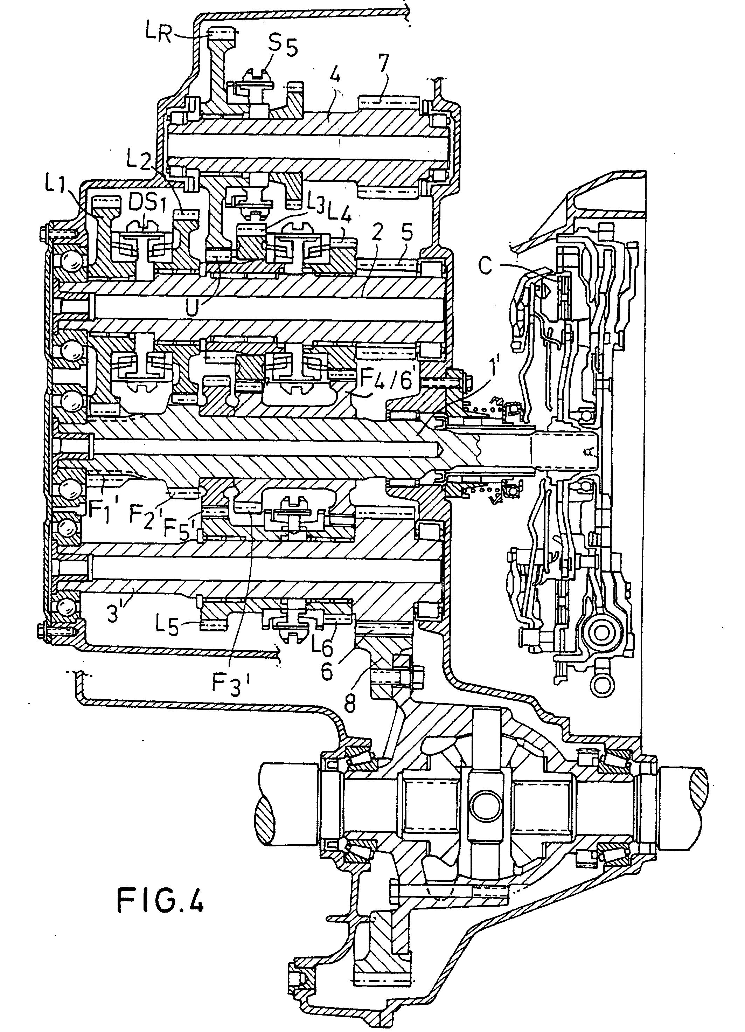

In den Figuren 3 und 4, die bauliche Ausführungen der Getriebekonzepte gemäß den Figuren 1 und 2 zeigen, sind die entsprechenden Bauteile mit den gleichen Bezugszeichen versehen.

Aus einem entsprechenden Vergleich der mit übereinstimmenden Bezugszeichen versehenen Bauteile in den Figuren 3 und 4 kann deren identische geometrische Auslegung und der entsprechenden verlagerten und gedrehten Anordnung klar erfaßt werden.

In Fig. 5 ist nur der Vollständigkeit halber die Lage der Getriebeachsen I bis IV sowie die Lage der Ritzel in Verbindung mit dem Endabtriebszahnrad gezeigt.

Nur der Vollständigkeit halber wird darauf hingewiesen, daß selbstverständlich beide Getriebeversionen, das Handschaltgetriebe und das Lastschaltgetriebe im gleichen Getriebegehäuse untergebracht sind und auch die für das Lastschaltgetriebe erforderliche Doppelkupplungsanordnung im Bauraum der einfachen Kupplung untergebracht werden muß.

## Patentansprüche

1. Verwendung von gleichen Bauteilen in einer Handschaltversion und in einer Lastschaltversion eines 6-Gang-Vorgelege-Wechselgetriebes für Kraftfahrzeuge, wobei das Getriebe zumindest eine Eingangswelle (1 bzw. 1c und 1h) und zumindest zwei parallel hierzu angeordneten Vorgelegewellen (2 und 3) aufweist, die mit jeweils einem Ritzel (5 und 6) versehen sind, das in Eingriff mit einem Endabtriebszahnrad (8) steht, wobei auf der bzw. den Eingangswellen (1 bzw. 1c und 1h) Festräder (F1 bis F6) angeordnet sind, die in ständigem Eingriff mit Losrädem (L1 bis L6) auf den Vorgelegewellen (2 und 3) stehen, benachbart zu denen einfache oder doppelte Synchronisiereinheiten (DS1, DS2, DS3, S3 und S4) vorgesehen sind, über die sie selektiv mit ihren Vorgelegewellen (2 und 3) verbindbar sind, und wobei in der manuell schaltbaren Handschaltversion eine Eingangswelle (1) von einer Einfachkupplung (C) und in der hilfskraftbetätigten Lastschaltversion zwei konzentrische Eingangswellen (1c und 1h) von einer Doppelkupplung (C1 und C2) beaufschlagbar sind,
**gekennzeichnet durch** folgende gleiche Bauteile:
Losräder (L1-L4) der ersten Vorgelegewelle (2), wobei die Losräder (L1-L4) bei Handschaltversion und Lastschaltversion in unterschiedlicher axialer Anordnung oder um 180° gedrehter Lage angeordnet sind.

2. Verwendung von gleichen Bauteilen nach Anspruch 1,
**gekennzeichnet durch** folgende gleiche Bauteile:
Erste Vorgelegewelle (2).

3. Verwendung von gleichen Bauteilen nach Anspruch 1,
**gekennzeichnet durch** folgende gleiche Bauteile:
Losräder (L5, L6) der zweiten Vorgelegewelle (3).

4. Verwendung von gleichen Bauteilen nach Anspruch 1,
**gekennzeichnet durch** folgende gleiche Bauteile:
Losrad (LR), Synchronisiereinheit (85) und dritte Vorgelegewelle (4) des Rückwärtsganges (LR).

5. Verwendung von gleichen Bauteilen nach Anspruch 1,
**gekennzeichnet durch** folgende gleiche Bauteile:
Doppel-Synchronisiereinheiten (DS1, DS2) der ersten Vorgelegewelle (2).

## Claims

1. Use of same components in a hand shift version and in a load shift version of a six-speed countershaft transmission system for motor vehicles, wherein the transmission system has at least one input shaft (1 / 1c and 1h) and at least two countershafts (2 and 3) positioned parallel hereto, which are respectively provided with a pinion (5 and 6), which is in engagement with an end output pinion (8), wherein on the input shaft/s (1 / 1c and 1h) fixed wheels (F1 to F6) are positioned, which are in constant engagement with loose wheels (L1 to L6) on the countershafts (2 and 3), neighbouring which simple or double synchronisation units (DS1, DS2, DS3, S3 and S4) are provided, via which they can be connected selectively with their countershafts (2 and 3), and wherein in the manually shifted hand shift version one input shaft (1) can be impacted from a simple clutch (C) and in the servo-activated load shift version two concentric input shafts (1c and 1h) can be impacted from a double clutch, **characterised by** the following components:
loose wheels (L1 - L4) of the first countershaft (2), wherein the loose wheels (L1 - L4) in the hand shift version and the load shift version are positioned in different axial arrangement or in a position rotated by 180°.

2. Use of same components according to Claim 1,
**characterised by** the following same components:
first countershaft (2).

3. Use of same components according to Claim 1,
**characterised by** the following same components:
loose wheels (L5, L6) of the second countershaft (3).

4. Use of same components according to Claim 1,
**characterised by** the following same components:
loose wheel (LR), synchronisation unit (S5) and third countershaft (4) of the reverse gear (LR).

5. Use of same components according to Claim 1,
**characterised by** the following same components:
double synchronisation units (DS1, DS2) of the first countershaft (2).

## Revendications

1. Utilisation de pièces structurelles identiques dans une version à commutation manuelle et dans une version à commutation en charge d'une boîte de vitesses à six vitesses du type à arbres secondaires pour véhicules automobiles, la transmission comprenant au moins un arbre d'entrée (1, respectivement 1c et 1h) et au moins deux arbres secondaires (2 et 3) disposés parallèlement à ce dernier et munis, à chaque fois, d'un pignon (5 et 6) en prise avec une roue dentée (8) de sortie finale, des pignons fixes (F1 à F6), respectivement calés sur l'arbre ou les arbres d'entrée (1, respectivement 1c et 1h), étant en prise permanente avec des pignons fous (L1 à L6) sur les arbres secondaires (2 et 3), au voisinage desquels sont prévues des unités de synchronisation simple ou double (DS1, DS2, DS3, S3 et S4) par l'intermédiaire desquelles ils peuvent être sélectivement reliés à leurs arbres secondaires (2 et 3), sachant que, dans la version à commutation manuelle manoeuvrable à la main, un arbre d'entrée (1) peut être sollicité par un accouplement simple (C) et que, dans la version à commutation en charge à actionnement par une force auxiliaire, deux arbres d'entrée concentriques (1c et 1h) peuvent être sollicités par un accouplement double (C1 et C2),
**caractérisée par** les pièces structurelles identiques suivantes :
pignons fous (L1-L4) du premier arbre secondaire (2), lesdits pignons fous (L1-L4) étant agencés, dans la version à commutation manuelle et dans la version à commutation en charge, selon une disposition axiale différente ou une position décalée de 180°.

2. Utilisation de pièces structurelles identiques, selon la revendication 1,
**caractérisée par** les pièces structurelles identiques suivantes :
premier arbre secondaire (2).

3. Utilisation de pièces structurelles identiques, selon la revendication 1,
**caractérisée par** les pièces structurelles identiques suivantes :
pignons fous (L5, L6) du deuxième arbre secondaire (3).

4. Utilisation de pièces structurelles identiques, selon la revendication 1,
**caractérisée par** les pièces structurelles identiques suivantes :
pignon fou (LR), unité de synchronisation (S5) et troisième arbre secondaire (4) de la marche arrière (LR).

5. Utilisation de pièces structurelles identiques, selon la revendication 1,
**caractérisée par** les pièces structurelles identiques suivantes :
unités de synchronisation double (DS1, DS2) du premier arbre secondaire (2).
